Europäisches Patentamt

European Patent Office

Office européen des brevets

(19)

(11) Numéro de publication : **0 368 777 B1**

(12)

# FASCICULE DE BREVET EUROPEEN

(45) Date de publication du fascicule du brevet :
**30.12.92 Bulletin 92/53**

(51) Int. Cl.$^5$ : **B25J 15/02**

(21) Numéro de dépôt : **89460037.8**

(22) Date de dépôt : **30.10.89**

(54) **Pince pneumatique.**

(30) Priorité : **09.11.88 FR 8814853**

(43) Date de publication de la demande :
**16.05.90 Bulletin 90/20**

(45) Mention de la délivrance du brevet :
**30.12.92 Bulletin 92/53**

(84) Etats contractants désignés :
**AT BE CH DE ES FR GB GR IT LI LU NL SE**

(56) Documents cités :
**FR-A- 2 265 495**
**FR-A- 2 424 797**
**FR-A- 2 454 878**
**FR-A- 2 527 968**
**FR-A- 2 592 827**
**US-A- 4 783 106**

(73) Titulaire : **Roudaut, Philippe Robert Louis**
**142, rue du Général Leclerc**
**F-95120 Ermont (FR)**

(72) Inventeur : **Roudaut, Philippe Robert Louis**
**142, rue du Général Leclerc**
**F-95120 Ermont (FR)**

(74) Mandataire : **Le Guen, Louis François**
**CABINET Louis LE GUEN 38, rue Levavasseur**
**B.P. 91**
**F-35802 Dinard Cédex (FR)**

EP 0 368 777 B1

# Description

La présente invention concerne une pince pneumatique et, plus particulièrement, une pince utilisée dans le domaine de l'automatisation pour effectuer des opérations telles que le transfert de pièces.

La préhension, dans le domaine de l'automatisation, nécessite généralement de connaître la "présence pièce" au droit des doigts de la pince, dès le serrage de ceux-ci, et surtout pendant toute la séquence du transfert, ne serait-ce que pour des raisons de sécurité. Le moyen le plus utilisé sur les pinces pneumatiques consiste à "supposer" la "présence pièce" dès lors qu'aucun signal d'absence n'est obtenu, ce dernier étant produit, par exemple, au terme d'une surcourse des doigts ou du piston de commande venant en contact avec une butée ou un capteur.

Ainsi, l'ordre d'exécution de la séquence ultérieure ne peut être donné qu'après la fin d'une temporisation d'où l'on déduit, s'il n'y a pas de signal d'absence, que la pièce est présente. Par sécurité, la temporisation est généralement plus longue que nécessaire et donne lieu à un temps mort préjudiciable à la cadence.

Certains systèmes permettent d'avoir une information directe de la présence de la pièce. On y utilise, par exemple, des moyens tactiles tels que des patins en élastomère conducteurs ou en composites de fibres de verre et de carbone qui provoquent des variations de courant électrique lorsqu'une pression leur est appliquée sur une face. Cependant, les élastomères présentent de l'hystérésis et on ne peut les employer à des cadences rapides. Les composites de fibres de verre et de carbone ont, eux, une durée de vie très limitée car les fibres de verre se cassent rapidement sous l'influence de pressions alternées.

Des moyens optiques, sans contact avec la pièce, peuvent également fournir une indication directe de la présence de la pièce. Toutefois, ils sont sensibles aux phénomènes de luminosité, tels que des réflexions, que peut engendrer l'état surface des pièces à saisir. De plus, en pratique, ces moyens sont alimentés par des câbles électriques et les mouvements alternés et répétitifs des doigts à vitesse rapide peuvent entraîner la rupture de ces câbles et/ou engendrer des parasites. Enfin, en raison de l'encrassement, leur fonctionnement en milieu polluant, poussiéreux, etc., est aléatoire.

Dans le document FR-A-2 424 797, il est décrit une pince de préhension donnant directement une information sur la position des doigts de la pince et, en particulier, une information "présence de pièce" dès leur serrage. Cette information est obtenue par une coulisse mobile servant à actionner les doigts qui peut, dans des positions déterminées, obturer trois ajutages reliés par des conduites à des éléments indicateurs. La pression dans ces conduites permet d'obtenir, lorsque le premier ajutage est obturé, un signal "pince ouverte", lorsque le second est obturé, un sigal "pince fermée", et lorsque le troisième est obturé, un signal "aucun objet saisi". A l'aide de ces trois informations, il est aisé d'en déduire une information "présence de pièce".

L'inconvénient majeur de la pince décrite dans ce document réside dans le fait que, si pour une raison ou une autre, la pression dans les conduites qui l'alimentent en air comprimé est coupée, la force de serrage est relâchée et la pièce libérée peut occasionner des dommages. Dans ce cas, également, les informations sur la position des doigts ne peuvent plus être exploitées.

On a tenté de résoudre cet inconvénient dans le document FR-A-2 592 827 qui décrit une pince conforme au préamble de la revendication 1. Dans ce document, il est décrit une pince donnant une information directe de "présence de pièce", dès serrage de celle-ci, par un moyen intégré dans la pince. Plus précisément cette pince comporte un corps de vérin, une tête de préhension reliée au corps de vérin, des doigts portés par la tête de préhension, une tige de vérin coulissant dans le corps de vérin et par rapport à la tête de préhension, et une pièce de manoeuvre solidaire du bout libre de la tige de vérin et pourvue de barreaux capables d'actionner les doigts en réponse aux mouvements de la tige de vérin. Des moyens reliant la tête de préhension au corps de vérin permettent à la tête de préhension de se déplacer librement parallèlement à la tige de vérin entre une position de contact et une position légèrement écartée. Au corps de vérin est associé un tiroir de contrôle pouvant coulisser dans une cavité cylindrique pour y prendre deux états, le tiroir de contrôle se composant d'une tige plus courte que ladite cavité et sur laquelle sont montés trois anneaux définissant avec ladite cavité quatre chambres, la première entre le premier anneau et la première extrémité de la cavité, la seconde entre le premier et le second anneaux autour de la tige, la troisième entre le second et le troisième anneaux autour de la tige, et la quatrième entre le troisième anneau et la seconde extrémité de la cavité. Une butée est fixée dans la première chambre sur la tige du tiroir pour limiter la course du tiroir vers la première extrémité de la cavité, la première chambre communiquant avec une première chambre d'action du corps de vérin par un premier conduit, la troisième chambre communiquant avec la seconde chambre d'action du corps de vérin par un second conduit. La seconde chambre d'action du corps de vérin communique avec l'intervalle entre le corps de vérin et une face adjacente de la tête de préhension par un troisième conduit, le fond de la seconde extrémité de la cavité communiquant avec le troisième conduit par un quatrième conduit. Le tiroir est déplacé vers la première extrémité de la cavité quand la pince a saisi une pièce à saisir et vers la seconde extrémité de la cavité quand la pince s'ouvre ou referme les doigts avant de saisir une pièce. Des canaux sont prévus dans le corps du vérin pour pouvoir exploiter le déplacement du tiroir dans sa cavité et en déduire des informations "présence de pièce", "pince ouverte", "pince fermée".

Avec cette pince, une fois les doigts en contact avec la pièce, la tige de vérin ne peut plus reculer et entraîne alors la tête de préhension dans sa position de contact. Là, elle obture le troisième conduit et met alors le quatrième conduit en communication avec la seconde chambre d'action du corps de vérin, dans laquelle la pression augmente. Sous l'effet de cette pression, le tiroir se déplace vers la seconde extrémité de sa cavité, ce qui a pour conséquence d'obturer le canal d'admission de l'air comprimé. Ainsi, si, pour une raison non prévue, la pression d'arrivée d'air à ce canal est coupée, la pression établie dans la seconde chambre du corps de vérin se maintient et le serrage de la pièce saisie est maintenu.

Un autre avantage de l'agencement de la pince décrit dans ce document est d'établir une pression de fonctionnement modérée entre la position ouverte de la pince et la position de serrage sur la pièce, la pression maximale étant établie quand cette position est atteinte.

En effet, en course d'approche des doigts, une faible pression sur le piston suffit, avant d'arriver sur la butée que constitue la pièce à saisir, seuls étant à vaincre les frottements et inerties des parties en mouvement. Ensuite, la pression croît dans la chambre de travail du cylindre jusqu'à l'équilibre avec le réseau d'alimentation en air comprimé. Donc, pendant le déplacement du piston, il y a un écoulement d'air dans le canal d'arrivée.

Néanmoins, cette pince présente l'inconvénient qu'au moment où les doigts entrent en contact avec la pièce et que la tige du corps de vérin entraîne la tête de préhension, celle-ci a un mouvement brusque vers le haut, ce qui peut occasionner la "perte" de la pièce à saisir.

Un objet de l'invention est donc de prévoir une pince de préhension qui peut fournir des informations sur la position de ces doigts, en particulier des informations "présence de pièce", "doigts ouverts", "doigts fermés", qui peut maintenir la pression de serrage même lorsque l'alimentation en air comprimé est coupée, et dont la prise d'une pièce à saisir est contrôlée.

Cet objet, ainsi que d'autres, sont atteints par la mise en oeuvre de la combinaison de moyens définie dans la revendication 1. Des mesures préférentielles sont indiquées dans les revendications dépendantes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est une vue schématique en coupe d'une pince de l'art antérieur, en position fermée,
la Fig. 2 est une vue schématique en coupe d'une pince selon l'invention, en position fermée,
la Fig. 3 montre la pince de la Fig. 2, en position ouverte,
la Fig. 4 montre la pince de la Fig. 2, avec une pièce serrée entre les doigts, et
la Fig. 5 est une vue en coupe d'un tiroir utilisé dans la pince de la Fig. 2.

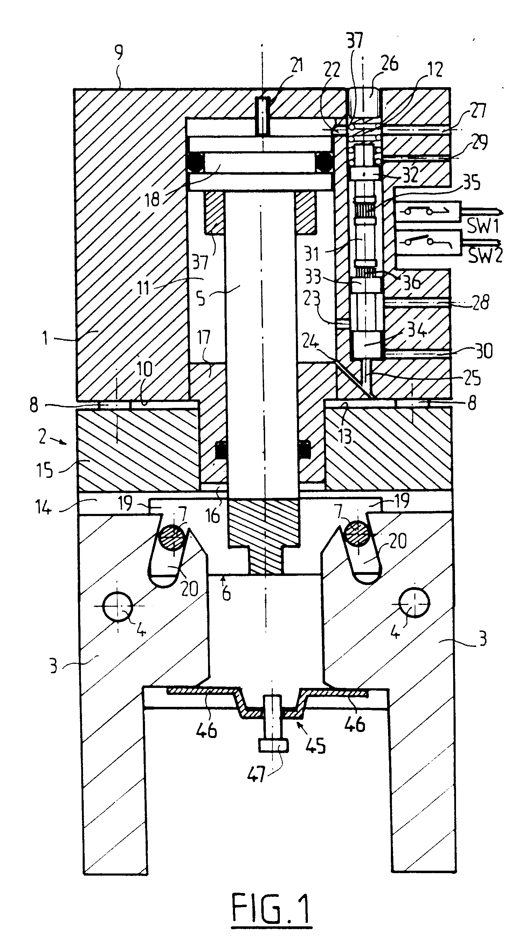

La pince montrée à la Fig. 1 est une pince de l'art antérieur, telle que celle qui est décrite dans le document FR-A-2 592 827. Elle comporte un corps de vérin 1, une tête de préhension 2, des doigts 3 montés rotatifs autour d'axes 4 portés par la tête de préhension 2, une tige de vérin 5 coulissant dans le corps 1, et une pièce de manoeuvre 6 montée au bout de la tige 5 et pourvue de barreaux 7 capables de faire pivoter les doigts 3, la tête de préhension 2 étant reliée au corps de vérin 1 par des vis longues 8.

Le corps de vérin 1 est sensiblement parallélépipédique, avec une face supérieure 9 et une face inférieure 10. Il comporte deux chambres cylindriques à axes parallèles: une première chambre ou chambre principale 11 qui est ouverte sur sa face inférieure 10, et une seconde chambre ou chambre secondaire 12 qui est ouverte sur sa face supérieure 9. La tige de vérin 5 se meut dans la chambre 11.

La tête de préhension 2 a aussi la forme générale d'un parallélépipède dont la face supérieure 13 peut s'appliquer contre la face inférieure 10 du corps de vérin 1. Les faces 10 et 13 sont de préférence de mêmes dimensions. La tête 2 est fixée sur le corps 1 par des vis 8 qui traversent librement le corps 1, à partir de sa face supérieure 9, et se vissent dans des trous taraudés de la tête 2. Un léger jeu est laissé entre le corps 1 et la tête 2. Les faces 10 et 13 sont rectifiées de manière que leur contact soit parfait quand elles sont appliquées l'une sur l'autre.

La tête de préhension 2 a un profil en U inversé avec deux ailes verticales 14 et une base 15. Les ailes 14 comportent des paliers pour loger les extrémités des axes transversaux 4 d'articulation des doigts 3. Les axes 4 sont disposés symétriquement par rapport à un plan de symétrie transversal contenant l'axe de la tige 5.

Dans sa partie médiane, la base 15 est traversée de haut en bas par un conduit cylindrique 16 de diamètre légèrement inférieur à celui de la chambre 11. L'axe longitudinal de la chambre 11 et celui du conduit 16 sont alignés. Dans le conduit 16, à partir de la face supérieure 13 de la tête 2, est engagée de façon étanche la partie inférieure d'une bague 17 dont la partie supérieure, plus large, est fixée de manière étanche dans la partie inférieure de la chambre 11. La bague 17 est montée libre de coulisser dans le conduit 16. La bague 17 est traversée par la tige de vérin 5.

L'extrémité supérieure de la tige 5 porte un piston 18 logé dans la chambre 11 tandis que son extrémité inférieure porte la pièce de manoeuvre 6. La pièce 6 comprend deux paires de bras latéraux 19, deux barreaux transversaux 7 étant fixés entre les bras de chaque paire. Les barreaux 7 sont engagés dans des fentes obliques ouvertes 20 prévues dans les parties supérieures respectives des doigts 3. Les fentes 20 ont chacune des bords parallèles, reliés par un fond arrondi. Les bords des fentes 20 servent de rampes d'appui pour les barreaux 7. Les fentes 20 ont des directions générales qui concourent en un point de l'axe de symétrie de la chambre cylindrique 11 et qui passent entre les axes de rotation 4 et ledit axe de symétrie.

A la Fig. 1, il n'y a pas de pression au-dessus du piston 18. La tige 5 est rentrée et la pièce de manoeuvre 6 est en position haute. Les barreaux 7, portant respectivement sur les bords supérieurs des fentes 20, ferment les doigts 3. Le fonctionnement des doigts de la pince de la Fig. 1 est connu et a été complètement décrit dans le document déjà mentionné ci-dessus.

Une butée 21 est prévue en saillie sous le fond de la chambre 11 pour limiter le mouvement du piston 18 vers le haut. Cette butée 21 peut être réglable.

La chambre 11 est en communication avec la chambre 12 par un conduit supérieur 22 et un conduit inférieur 23. Un conduit 24, situé en dessous du conduit 23, part de la chambre 11, au-dessus de la bague 17, et débouche dans la face inférieure 10 du corps 1. Le conduit 24 communique avec un conduit 25 débouchant dans le fond de la chambre 12.

La chambre 12 est fermée, à son extrémité supérieure, par un bouchon 26. Elle est en communication avec l'extérieur par des conduits 27, 28, 29 et 30 débouchant sur la face latérale du corps 1. Les conduits 27 et 28 sont des conduits d'amenée et/ou d'évacuation du fluide de commande. Les conduits 29 et 30 sont prévus pour produire des signaux pneumatiques. Le conduit 27 est au-dessus du conduit 29, lui-même au-dessus du conduit 28, lui-même au-dessus du conduit 30.

Dans la chambre 12, se trouve un tiroir de distribution 31 de longueur inférieure à celle de la chambre 12 pour pouvoir s'y déplacer longitudinalement. Le tiroir 31 est formé d'une tige de diamètre plus petit que celui de la chambre 12 et sur laquelle sont montées des parties annulaires en contact étanche avec la paroi de la chambre 12. Les parties annulaires sont au nombre de trois: un anneau haut 32, un anneau médian 33 et un anneau bas 34. Avec ses anneaux, la tige 31 définit des chambres mobiles et indépendantes dans la chambre 12 afin d'y établir différentes connexions de fluide. L'anneau haut 32 est au-dessous de l'extrémité supérieure du tiroir 31 et reste toujours au-dessous des conduits 22 et 27. L'anneau bas 34 consitue l'extrémité inférieure du tiroir 31. Quand le tiroir 31 n'est pas en contact sur le fond de la chambre 12, il y a quatre chambres étagées qui ne sont plus que trois lorsque le tiroir est en position basse.

De plus, la tige 31 comporte deux bagues électromagnétiques 35 et 36 prévues pour commander des contacts de relais montés sur le corps 1.

Que le tiroir 31 et le piston 18 soient en position basse ou haute, les conduits 27 et 22 débouchent au-dessus de l'anneau 32 et du piston 18.

Quand le tiroir 31 est en position basse, comme le montre la Fig. 1, l'anneau 33 et l'anneau 34 définissent une chambre dans laquelle débouchent les conduits 28 et 23, les anneaux 32 et 33 définissent une chambre dans laquelle ne débouche aucun conduit, le conduit 29 débouche au-dessus de l'anneau 32, et l'anneau 34 obture les conduits 25 et 30 vers la chambre 12.

Si le tiroir 31 était en position haute, en cas de saisie externe de pièce, les anneaux 32 et 33 définiraient une chambre dans laquelle déboucherait le conduit 29, les anneaux 33 et 34 définiraient une chambre dans laquelle ne déboucherait aucun conduit, l'anneau 34 obturerait le conduit 28 vers la chambre 12, et sous l'anneau 34 se formerait une chambre dans laquelle déboucheraient les conduits 23, 25 et 30.

Les sections des conduits 22, 23, 25, 27, 28, 29 et 30 sont choisies en fonction des caractéristiques de la pince. La section du conduit 24 est choisie relativement faible pour que la fuite vers l'air libre au cours de la fermeture des doigts n'influence pas l'action du piston 18.

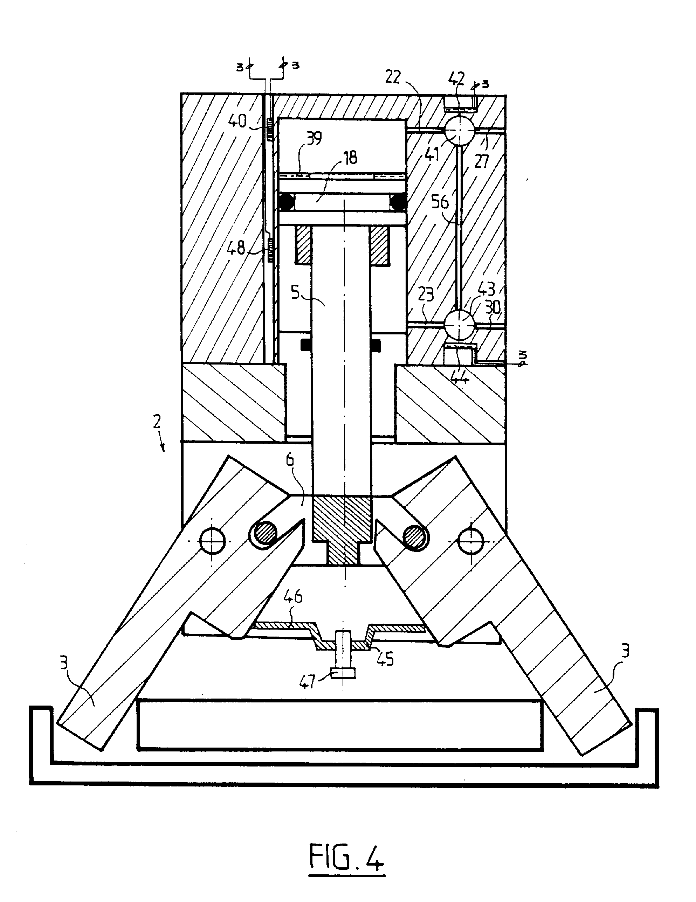

Comme on l'a mentionné plus haut, les vis 8 traversent librement le corps 1 pour se visser dans des trous taraudés de la tête 2. Les vis 8 ne sont pas vissées au point de serrer le corps 1 contre la tête 2. Ainsi, comme le montre la Fig. 1 où les doigts sont fermés, mais ne serrent pas une pièce, et où aucun fluide sous pression n'est appliqué au piston 18, il existe un intervalle entre le corps 1 et la tête 2. Cet intervalle peut être réglé en tournant plus ou moins les vis 8. Par ailleurs, c'est par cet intervalle que les conduits 24 et 25 sont mis à l'air libre, étant entendu que, quand l'intervalle est nul, Fig 4, ces conduits mettent en relation l'espace de chambre 11 située au-dessous du piston 18, d'une part, et le dessous de l'anneau 34, d'autre part.

A chaque bague magnétique ou aimant 35 ou 36, est respectivement associé un contact électrique SW1 ou SW2. Quand le tiroir 31 est en position basse, Fig. 1, le contact SW1 est juste en face de l'aimant 35 tandis que le contact SW2 est décalé en hauteur à la fois par rapport à l'aimant 35 et à l'aimant 36. Il en résulte, les forces des aimants étant choisies convenablement, que le contact SW1 est fermé tandis que le contact SW2 est ouvert.

Une bague 37 est montée, autour de la tige 5, sous le piston 18, pour définir la position d'ouverture extrême et, notamment, empêcher le piston 18 de descendre au-dessous du conduit 23.

Le bouchon 26 est une vis et, entre la vis 26 et l'anneau haut 32, est monté un ressort hélicoïdal 37 travaillant à la compression. En actionnant la vis 26, on peut commander la force de rappel du ressort 37, c'est-à-dire le tarer.

Quand le tiroir 31 est en position haute, l'aimant 36 vient juste en face du contact SW2 tandis que l'aimant 35 s'éloigne du contact SW1. Il en résulte que le contact SW2 est ouvert et le contact SW1 fermé. Un circuit logique approprié, non montré, relié aux contacts SW1 et SW2 permet de reconnaître ces deux états et d'en déduire les positions de la tige, étant entendu que les autres états de la paire de contacts sont transitoires ou engendrent une alarme.

A noter également que, quand le tiroir 31 est en position basse, le conduit 30 isolé ne transmet pas de pression à un manomètre associé, non montré, tandis que le conduit 29 peut transmettre une pression à un autre manomètre. Quand le tiroir 31 est en position haute, le conduit 29 est isolé alors que le conduit 30 transmet une pression.

A la Fig. 1, la pince est montrée fermée, au repos. Le tiroir 31 est, sous l'action du ressort 37, en position basse, en appui sur le fond de la chambre 12. Le piston 18 est en position haute, contre la butée 21, les doigts 3 sont verticaux et la face inférieure 10 du corps 1 est décollée de la face supérieure 13 de la tête 2.

La partie supérieure de la chambre 12, au-dessus du tiroir 31, met en communication le conduit 27, le conduit 22 aboutissant dans la partie supérieure de la chambre 11, au-dessus du piston 18, et le conduit 29. La chambre qui se trouve entre les parties annulaires médiane et inférieure 33 et 34 met en communication, par le conduit 23, la partie inférieure de la chambre 11, sous le piston 18, et le conduit 28. Le conduit inférieur 30 est obturé par la partie annulaire inférieure 34. La position, montrée à la Fig. 1, correspond au cas où la pince a été refermée en l'absence de pièce et, plus particulièrement, soit à la fin de la rentrée de la tige 5 avec de la pression dans le conduit 28, soit au temps d'arrêt qui suit avant d'appliquer de la pression au conduit 27.

Quand on applique du fluide sous pression par le conduit 27, il passe dans la partie haute de la chambre 11 par le conduit 22 et fait descendre le piston 18, ce qui ouvre les doigts 3 jusqu'à la position d'ouverture éventuellement totale. Le fluide sous pression passe dans le conduit 29 et produit un signal d'ouverture de pince.

Pendant la course du piston 18 vers le bas, pour ouvrir les doigts, le gaz compris dans la partie basse de la chambre 11, sous le piston 18, s'échappe par le conduit 23, en communication avec le conduit 28, et par le conduit 24, les conduits 28 et 24 étant ouverts à l'air libre. Le tiroir 31 reste en position basse dans la chambre 12.

Pour refermer les doigts 3 de la position ouverte, à la position d'entrée en contact avec une pièce à saisir, on bascule le passage du fluide sous pression sur le conduit 28, le conduit 27 étant alors ouvert à l'air libre. Le fluide sous pression passe du conduit 28 par le conduit 23 dans la partie inférieure de la chambre 11, sous le piston 18. Comme les faces 10 et 13 ne sont pas appliquées l'une contre l'autre, une partie du fluide sous pression arrivant dans la partie basse de la chambre 11 s'échappe par le conduit 24 et la course des doigts 3 est donc décrite à vitesse limitée.

Comme le conduit 27 est ouvert à l'air libre, le gaz passant dans le conduit 29 n'est plus sous pression et il n'y a plus de signal. De même, il n'y a pas de signal à l'extrémité du conduit 30, la partie annulaire 34 l'obturant toujours. L'absence de signal aux extrémités des conduits 29 et 30 correspond donc à la course des doigts, de l'ouverture à la position d'entrée en contact avec la pièce à saisir.

Une fois les doigts 3 en contact avec la pièce, la tige 5 ne peut plus reculer par rapport à la tête 2 et elle entraîne celle-ci vers le haut si bien que la face supérieure 13 de la tête 2 se colle contre la face inférieure 10 du corps 1. L'orifice du conduit 24 est alors obturé, si bien qu'une pression croissante s'établit dans la partie inférieure de la chambre 11, sous le piston 18. La pièce est alors fermement maintenue entre le doigts 3. On observera que les doigts 3 se referment lentement sur la pièce avant que la pression n'augmente pour obtenir une bonne tenue. On évite ainsi les bris de pièce à la saisie.

Le conduit 24, en communication avec le conduit 25, transmet cette pression sous le tiroir 31, tendant à faire monter celui-ci dans la chambre 12, contre la force de rappel du ressort 37. En conséquence, la pression continue à augmenter encore dans la partie inférieure de la chambre 11, sous le piston 18. Quand la pression atteint une valeur telle que la force du ressort 37 est surmontée, le tiroir 31 monte effectivement. L'orifice du conduit 30 est libéré par la partie annulaire 34 et un signal est produit à son extrémité. Dans le même temps, la partie annulaire 34 se retrouve devant le conduit 28 qu'elle obture. Ainsi, il apparaît que l'information donnée par l'aimant 36 au contact SW2 n'est déclenchée qu'une fois une pression prédéterminée atteinte dans la chambre 11 sous le piston 18. Les doigts 3 exercent donc une force de serrage sur la pièce, cette force étant déterminée par le ressort 37 et étant réglable par la vis 26.

Dans cette position, si, pour une raison non prévue, la pression est coupée dans le conduit 28, la pression établie sous le piston 18 se maintient et le blocage de la pièce saisie est maintenu.

La pression dans le conduit 30 fournit le signal de pièce saisie ou "présence pièce". De plus, la bague électromagnétique 36 est en position devant le contact SW2 qui lui correspond qui, lui aussi, fournit un signal de "présence pièce".

Pour débloquer la pince afin de relâcher la pièce, on reconnecte l'arrivée de fluide sous pression dans le conduit 27. Dans la chambre 11, il s'établit au-dessus du piston 18 une pression sensiblement égale à celle du fluide emprisonné sous le piston. Comme la surface efficace supérieure du piston est plus grande que sa surface efficace inférieure, la tige 5 descend en entraînant d'abord la tête de préhension 2 dont la paroi 13 se décolle de la paroi 10 du corps 1.

Les conduits 24 et 25 se retrouvent alors ouverts à l'air libre. La pression chute sous le tiroir 31 qui retombe au fond de la chambre 12 en libérant les conduits 30 et 31. Le gaz de la chambre 11 sous le piston 18 peut alors s'échapper par le conduit 30 et le piston 18 descend rapidement ramenant les doigts 3 en position d'ouverture pour la saisie d'une autre pièce.

Dans le cas où, après une ouverture des doigts, on met sous pression le conduit 28, mais qu'il n'y a pas de pièce à saisir, les doigts 3 se referment jusqu'à ce que la face supérieure du piston 18 viennent en contact avec la butée 21, mais il n'y a pas entraînement de la tête de préhension 2 par la tige 5, donc le tiroir 31 reste en position basse.

Ainsi, il apparaît que c'est seulement quand une pièce est saisie, que le tiroir 31 passe en position haute, laquelle indique l'état "présence pièce". La position haute du tiroir 31 correspond électriquement à SW1 ouvert et SW2 fermé, et pneumatiquement à 30 sous pression et 29 non sous pression. Traités ensemble, les signaux électriques et pneumatiques peuvent fournir quelques indications supplémentaires, telles que pince ouverte.

Comme il a déjà été indiqué, cette pince présente l'inconvénient majeur qu'au moment où les doigts 3 entrent en contact avec la pièce à saisir et que la tige 5 entraîne la tête de préhension 2, celle-ci a un mouvement brusque vers le haut, ce qui peut occasionner la perte de la pièce. L'invention consiste donc à remédier à cette inconvénient.

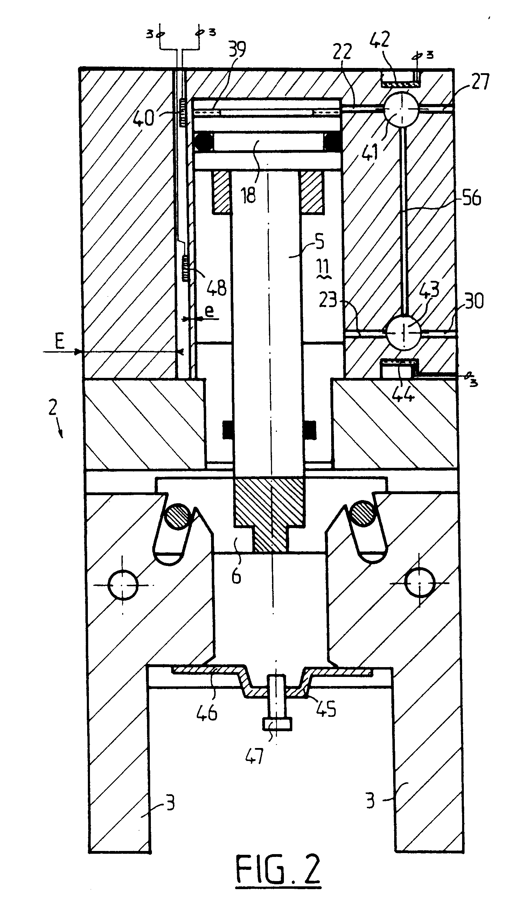

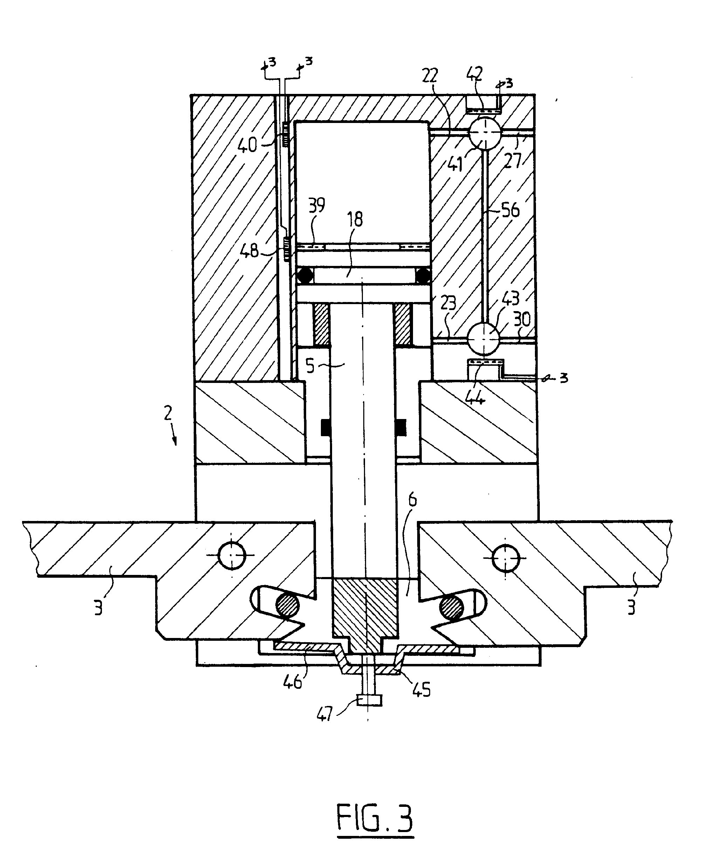

Aux Figs. 2 à 4, on a représenté, en plusieurs positions, une pince de préhension selon l'invention. Les mêmes éléments qu'à la Fig. 1 portent les mêmes références et ne seront pas décrits de nouveau. Dans cette pince, le piston 18 est muni, du côté opposé à la tige 5, d'un anneau magnétique 39. La position de l'anneau 39 peut être déterminée par un capteur à effet Hall 40, qui est logé dans un canal approprié du corps 1 et qui est parallèle à l'axe de la tige 5. La pièce de manoeuvre 6, les doigts étant fermés, est en butée sur la face inférieure interne de la tête de préhension 2. Cela permet de réserver une chambre au-dessus du piston 18 sans besoin d'un butée 21 et d'éviter des chocs sur l'anneau magnétique 39.

Dans les Figs. 1 à 4, on a aussi montré un ressort 45, avec entre les ailes 14, deux lames souples 46 qui fonctionnent en amortisseurs. Le ressort 45 est traversé dans sa zone centrale par une vis 47 servant de butée et à régler la fin de course de la pièce 6, c'est-à-dire l'ouverture maximale des doigts 3. En relation avec cette fin de course, il est prévu, dans le même canal que le capteur 40 et au-dessous de celui-ci, un capteur à effet Hall 48 qui contrôle la position de l'anneau 39 en position basse.

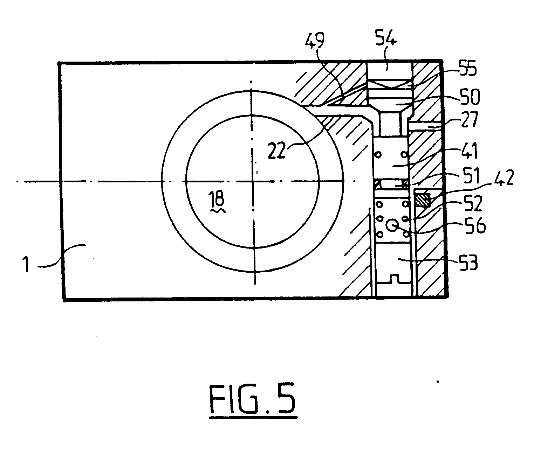

La chambre, qui se trouve au-dessus du piston 18, est reliée au canal 22 qui est lui-même sélectivement reliable à un canal 27 par l'intermédiaire d'un système à tiroir 41. Le canal 27 est sélectivement reliable à une source d'air sous pression ou à l'air libre. Le tiroir 41 est montré en détail à la Fig. 5. On notera que son orientation est horizontale alors que le tiroir 31 était vertical, en regardant les dessins. La position du tiroir 41 est contrôlée par un capteur à effet Hall 42.

La chambre qui se trouve au-dessous du piston 18, côté tige 5, est également reliée à un canal 23 qui lui-même est reliable sélectivement à un canal 30 par l'intermédiaire d'un autre système à tiroir 43. Le canal 30 est sélectivement reliable à une source d'air sous pression ou à l'air libre. Le tiroir 43 est identique au tiroir 41 et est, de manière avantageuse, horizontalement dirigé en sens inverse. La position du tiroir 43 est contrôlée par un capteur à effet Hall 44.

Le tiroir 41 de la Fig. 5 se loge dans un alésage adéquat horizontal. En pratique, le tiroir 41 comprend un corps 41 proprement dit et une tête 50 avec, entre 41 et 50, une partie étranglée qui permet de faire sélectivement communiquer les canaux 22 et 27, quand le tiroir est dans la position de la Fig. 5. Il est complété par un anneau magnétique 51 qui influence le capteur 42, un ressort hélicoïdal 52 taré par une vis 53, et, de l'autre côté de la tête 50, une butée 54 à pointe conique. La pointe conique de la butée 54 forme une petite chambre 55 entre 50 et 54, la chambre 55 étant en relation avec le canal 22, par l'intermédiaire d'un petit canal 49 qui fait un angle relativement aigu avec le canal 22.

Le fonctionnement est le suivant si l'on considère une préhension par l'intérieur d'une pièce, c'est-à-dire en écartant les doigts 3.

Le tiroir 41 est légèrement maintenu ouvert par le ressort 52, comme représenté à la Fig. 5, les doigts 3 étant fermés comme représenté à la Fig. 2 et le piston 18 étant en fin de course, ce qui est détecté par le capteur 40 en bonne position initiale. Sans cette information en 40, il n'est pas admis de commencer le cycle pour des raisons de sécurité quant à la position des doigts 3.

L'air étant admis par le canal 23 et alimentant la chambre haute par le canal 22, le piston 18 se déplace vers le bas à la moindre pression, car n'ayant à vaincre que les frottements mécaniques. Il y a écoulement d'air dans le conduit 22 et un effet dépressionnaire par le canal 49 sur la tête 50, lequel effet s'ajoute à la poussée du ressort 52 facilitant la grande ouverture du clapet 41. Le déplacement du piston 18 vers le bas est possible si la chambre d'action inférieure 11 n'est pas sous-pression et se trouve donc en communication avec l'air libre. Pour cela, le canal 23 doit communiquer avec le canal 30, et le tiroir 43 doit être ouvert. Des moyens sont prévus pour ouvrir le tiroir 43 en même temps que l'air est admis dans le canal 27. Ces moyens pourraient être extérieurs à la pince, tel qu'un canal en communication avec la face côté ressort du tiroir 43 et dont la pression est piloté extérieurement pour l'ouvrir. Un même canal pourrait être prévu avec le tiroir 41.

Avantageusement, ces moyens consistent en un canal 56 qui débouche dans les deux chambres contenant le ressort de rappel 52 des tiroirs 41, 43. Dans ce cas, l'air du conduit 22 vient également exercer sa pression, via le canal 56, sur la face du tiroir 43, du côté ressort de rappel du tiroir 43, afin d'ouvrir le tiroir 43 et vider l'air qui pourrait y être encore contenu.

Les doigts 3, venant en contact de la pièce à saisir, sont arrêtés dans leur course en écartement et bloquent le piston 18 sur une course intermédiaire. L'alimentation en air se poursuit dans la chambre haute et croît au maximum jusqu'à l'équilibre avec le réseau d'air. L'écoulement dans le canal 22 cessant, l'effet dépressionnaire par le conduit 49 cesse et la pression régnant dans la chambre haute s'exerce alors sur la face dorsale du tiroir 41 et le repousse en fermeture obturant le passage entre le canal 23 et le canal 22.

D'après le tarage du ressort 52 par action sur la vis 53, on comprend que la réaction du ressort 52 permet de rendre plus ou moins sensible le déplacement du tiroir 41 en fermeture, donc à une pression déterminée, avec une précision que ne pourrait permettre un ressort agissant seul, donc puissant.

Si le tarage est tel que la pression dans la chambre haute est insuffisante, le tiroir 41 n'est pas repoussé. Si elle est suffisante, le tiroir 41 est repoussé et, dans le cas de l'exemple, l'aimant 51 agit sur le capteur 42. Par ailleurs, l'aimant 39 du piston 18 s'approche du capteur 48. Celui-ci est linéaire et réglé à un seuil déterminé de manière à émettre un signal qui valide celui du capteur 42, pour une information de présence pièce, dans le cas où la cote de ladite pièce ainsi mesurée est correcte, pour poursuite du cycle.

Dans le cas où la pièce est absente, le piston 18 poursuit sa course jusqu'à sa butée finale sur la vis 47 et l'aimant 39 agit sur le même capteur 48, mais à un seuil différent traité électroniquement à la commande. Le tiroir 41 étant repoussé en fin de remplissage du cylindre donne également un signal par son capteur 42 qui a son tour sert à valider celui du capteur 48, mais en fin de course.

Le processus inverse à celui donné en exemple est à considérer pour une préhension par l'extérieur. L'admission d'air est faite par le canal 30. Le tiroir 43 étant ouvert, l'air s'écoule dans le canal 23 et entre dans la chambre de travail inférieure 11 du corps de vérin. En même temps, le tiroir 41 s'ouvre par l'effet de la pression transmise par le canal 56 et exercée sur sa face côté ressort. Lorsque les doigts sont en contact avec la pièce à saisir, la pression dans la chambre de travail inférieure croît et le tiroir 43 obture alors le passage de l'air entre le canal 30 et le canal 23. L'aimant 51 du tiroir 43 agit sur le capteur 44 et le signal délivré par le capteur 40, influencé par l'aimant 39 et réglé à un seuil déterminé, peut servir à valider celui du capteur 44.

Plus spécialement, pour les petites pièces dont la cadence de fonctionnement est relativement élevée et la course du piston peu importante, on combinera le capteur linéaire 40 en mesure d'éloignement et le capteur 48 en mesure d'approche, ceci par inversion selon le sens du déplacement du piston, donc du cas de préhension interne ou externe.

Plus précisément, l'aimant annulaire 39 est polarisé axialement afin d'avoir une face nord et l'autre sud pour flux torique et sa puissance est suffisante pour que le capteur linéaire soumis à ce flux puisse prendre en considération des variations de plus ou moins 1000 gauss.

Les dimensions de l'aimant 39 sont choisies de façon à ce que le flux soit efficace au travers de l'entrefer $\underline{e}$ et insensible au travers de la cloison E d'épaisseur supérieure à $\underline{e}$ évitant l'attraction de poussières magnétiques sur les faces de la pince. Un jeu relativement important est ménagé entre l'extérieur de cet aimant et l'alésage du cylindre afin que les micro-poussières magnétiques venant s'intercaler dans le jeu ne rayent pas la face du cylindre étant précisé que l'air utilisé est filtré des grosses particules.

Les capteurs 40, 48 sont intégrés dans le corps afin d'obtenir un effet bouclier anti-parasite des signaux, et de réduire l'entrefer avec les aimants mobiles. Les aimants utilisés sont à polarité axiale, le flux se refermant radialement, et de force permettant de solliciter les capteurs, mais sans action magnétique suffisante sur les faces extérieures de la pince, afin d'éviter l'attraction de poussières sensibles et de salissures.

La faible tension de fonctionnement des capteurs linéaires communs ne permet pas leur utilisation directe sur les automates actuels et de ce fait leurs signaux de sortie seront amplifiés pour les amener à un niveau convenable.

Ces signaux peuvent également être fournie à une carte d'acquisition analogique de 0 à 10 volts, ou à une carte à sortie numérique de 8 à 12 bits. Ces cartes peuvent servir à déterminer des valeurs de seuils pour lesquelles les tensions de sortie sur les capteurs 40 et 48 correspondant à des positions déterminées des doigts. Ces valeurs de seuils permettent de valider correctement les signaux délivrés par les capteurs 42 ou 44. Il est alors possible de mesurer efficacement les pièces à saisir et de ne prendre en compte, pour la suite du cycle, que celles dont la cote est bonne en déclenchant ou non la validation. La pince de l'invention peut ainsi être utilisée pour un test de dimensions et de tri.

Dans le cas ou plusieurs seuils sont convenablement fixés, la pince peut, selon ceux-ci, faire connaître la position d'une pièce, par exemple s'il s'agit d'un rectangle, peut différencier la largeur de la longueur et, ainsi, permettre de réorienter les doigts pour réaliser une prise correcte, si la cote constatée n'est pas celle qui était attendue. A noter que l'on peut ainsi éviter l'emploi d'un système coûteux de contrôle optique.

Il va de soi que, si l'on désire prendre des pièces de grosseurs différentes, la validation devra être donnée entre deux seuils déterminés.

Les seuils peuvent être déterminés et enregistrés par apprentissage selon des positions déterminées des doigts sur des pièces calibrées.

En ce qui concerne le retour des doigts à leur position initiale, il est nécessaire, pour commencer un cycle, de s'assurer de la bonne position des doigts au repos en même temps que leur maintien sous pression, car tout accrochage ou blocage sur leur course pourrait être source d'accident. Le fait que, par réciprocité, le tiroir n'agissant qu'en pression valide l'information du capteur de fin de course 48 permet de s'assurer à la fois de la bonne position initiale et du maintien par pression des doigts et ainsi d'autoriser le début du cycle.

## Revendications

1. Pince pneumatique comportant un corps de vérin (1), une tête de préhension (2) reliée au corps de vérin, des doigts (3) portés par la tête de préhension, un piston (18) et une tige de vérin (5) coulissant dans le corps de vérin et par rapport à la tête de préhension, une pièce de manoeuvre (6) solidaire du bout libre de la tige de vérin et pourvue de barreaux (7) capables d'actionner les doigts (3) en réponse aux mouvements de la tige de vérin (5), le piston (18) délimitant dans le corps de vérin (1) une chambre de travail supérieure et une chambre de travail inférieure, et un tiroir de contrôle (41) pouvant coulisser dans une cavité cylindrique pour y prendre un premier état dans lequel un canal d'admission d'air (27) communique avec la chambre d'action supérieure par un canal d'arrivée d'air, et un second état dans lequel le canal d'admission d'air ne communique plus avec ladite chambre, le tiroir (41) étant dans le premier état lorsque la pince ouvre ou referme les doigts (3) avant de saisir une pièce, et prenant le second état quand la pince a saisi une pièce à saisir, caractérisée en ce que le tiroir (41) est maintenu dans le premier état par un ressort taré (52) agissant axialement sur ledit tiroir (41) pour que sa tête (50) soit en contact avec une butée (54) à pointe conique, la butée (54) formant avec la tête (50) une chambre (55) en relation avec le canal d'arrivée d'air (22) par l'intermédiaire d'un canal oblique (49) à angle aigu, le canal oblique (49) provoquant un effet dépressionnaire sur la tête (50) du tiroir (41) pour le maintenir dans le premier état lorsque l'air alimente la chambre d'action supérieure du vérin par le canal d'entrée (22), la pression qui croît dans ladite chambre lorsque les doigts (8) qui s'écartent sont arrivés en butée sur la pièce à saisir exerçant son action sur la face dorsale du tiroir (41) pour qu'il prenne son second état, la tête (50) obturant alors le passage de l'air entre le canal (23) et le canal (22).

2. Pince suivant la revendication 1, caractérisée en ce que le tiroir (41) est muni d'un anneau magnétique (51) qui influence un capteur de champ magnétique (42) pour fournir une information de position, notamment dès qu'il y a butée des doigts sur une pièce à saisir ou en bout de course, l'information pouvant être une information de présence ou de fin de course.

3. Pince suivant la revendication 1 ou 2, caractérisée en ce qu'il est prévu, en-dessous du tiroir (41), un second tiroir (43) constitué également d'une tête (50) pouvant prendre également un premier état dans lequel un canal (30) est en communication avec un canal (23) associé à la chambre d'action inférieure (11) du corps de vérin, et un second état dans lequel il obture le passage entre le canal (30) et le canal (23), ce tiroir (43) étant également constitué d'une tête (50) en contact, dans le premier état, avec une butée (54) à pointe conique formant avec ladite tête (50) une chambre (55) en relation avec le canal (22) par un canal (49), le tiroir (43) et le tiroir (41) permettant l'utilisation de la pince en préhension externe ou en préhension interne.

4. Pince suivant l'une des revendications 1 à 3, caractérisée en ce qu'on autorise, en agissant sur le ressort taré (52) du tiroir (41) ou du tiroir (43) associé à la chambre de travail en pression, l'obturation du canal d'admission (27) qu'à une pression correspondant à un effort de serrage prédéterminé sur la pièce saisie.

5. Pince suivant l'une des revendications 1 à 4, caractérisée en ce que le piston (18) du vérin est muni, du côté opposé à la tige (5), d'un anneau magnétique (39) dont la position par rapport au corps de vérin peut être déterminée par des capteurs linéaires à effet Hall (40, 48) logés dans un canal approprié du corps de vérin.

6. Pince suivant la revendication 5, caractérisée en ce que l'information donnée par le capteur de champ magnétique (42) est validée par au moins l'un des capteurs linéaires (40, 48) dont le seuil, convenablement fixé pour une position du piston, est mis en mémoire.

7. Pince suivant la revendication 6, caractérisée en ce que, selon le seuil considéré, le piston est normalement arrêté par une pièce en "présence" ou par le fond du cylindre "en absence de pièce".

## Patentansprüche

1. Druckluftpresse mit einem Kolbenkörper (1), einem mit dem Kolbenkörper verbundenen Greifkopf, mit vom Greifkopf gehaltenen Fingern (3), einem Kolben (18) und einer Kolben stenge (5), die im Kolbenkörper gleitet und, gegenüber dem Greifkopf, ein Bedienteil (6), das fest mit dem freien Ende der Kolbenstange verbunden und mit Stäben (7) versehen ist, die die Finger (3) betätigen und zwar entsprechend den Bewegungen der Kolbenstange (5), wobei der Kolben (18) im Kolbenkörper (1) eine obere und eine untere Arbeitskammer begrenzt, mit einem Kontrollschieber (41), der in einem zylinderförmigen Hohlraum gleiten kann, um hier einen ersten Zustand einzunehmen, in dem ein Luftzulaufkanal (27) mit der oberen Arbeitskammer in Verbindung steht und zwar über einen Lufteinlaufkanal, ferner einen zweiten Zustand, in dem der Luftzulaufkanal nicht mit dieser Kammer in Verbindung steht, wobei sich der Schieber (41) im ersten Zustand befindet, wenn die Presse die Finger (3) öffnet oder schließt, bevor ein Teil ergriffen wird, in einem zweiten Zustand, wenn die Presse ein zu erfassendes Teil ergreift, dadurch **gekennzeichnet**, daß der Schieber (41) im ersten Zustand durch eine geeichte Feder (52) gehalten wird, die axial auf den Schieber (41) wirkt, damit sein Kopf (50) einen Anschlag (54) mit konischer Spitze berührt, wobei der Anschlag (54) mit dem Kopf (50) eine kammer (55) bildet und zwar inbezug auf den Lufteintrittskanal (22) über einen schrägen Kanal (49 im spitzen Winkel, wobei der schräge Kanal (49) einen Unterdruck auf den Kopf (50) des Schiebers (41) ausübt, um ihn in einem ersten Zustand zu halten, wenn die Luft die obere Arbeitskammer des Kolbens über den Eingangskanal (22) speist, wobei der Druck in der Kammer ansteigt, wenn die Finger (8) an dem zu erfassenden Teil anliegen und eine Wirkung auf die Rückenseite des Schiebers (41) ausgeübt wird, damit er in seinen zweiten Zustand geht, wobei der Kopf (50) den Luftdurchgang zwischen Kanal (23) und Kanal (22) veschließt.

2. Druckluftpresse nach Anspruch 1, dadurch gekennzeichnet, daß der Schieber (41) mit einem Magnetring (51) ausgerüstet ist, der einem Magnetfeldgeber (42) beeinflußt, um eine Lageinformation zu geben, insbesondere ab dem Noment, zu dem die Finger auf einem zu erfassenden oder durchlaufenden Teil aufliegen, wobei es sich bei dieser information entweder um eine Anwesenheits- oder Durchlaufinformation handeln kann.

3. Druckluftpresse nach Anspruch 1 oder 2, dadurch gekennzeichnet, daß unterhalb des Schiebers (41) ein zweiter Schieber (43) vorgesehen ist, der ebenfalls von einem Kopf (50) gebildet wird, der ebenfalls einen ersten Zustand ein nehmen kann, bei dem ein Kanal (30) mit einem Kanal (23) in Verbindung steht, der der unteren Arbeitskammer (11) des Kolbenkörpers zugeordnet ist, wobei in einem zweiten Zustand, in dem der Durchgang zwischen Kanal (30) und Kanal (239 verschlossen wird, dieser Schieber (43) ebenfalls durch einen Kopf (50) gebildet wird, der im ersten Zustand mit einem Anschlag (54) mit konischer Spitze in Verbindung steht und mit dem Kopf (50) eine Kammer (55) bildet, die mit den Kanal (22) über einen Kanal (49) in Verbindung steht, wobei der Schieber (43) und der Schieber (41) den Einsatz der Presse mit externer oder interner Griffwirkung ermöglichen.

4. Druckluftpresse nach einem der Ansprüche 1 bis 3, dadurch gekennzeichnet, daß mit Wirkung auf die geeichte Feder (52 des Schiebers (41) oder des Schiebers (43), mit Zuordnung zur Arbeitsdruckkammer, die Abdichtung das Zulaufkanals (27) eingeleitet wird und zwar bis zu einem Druck, der einer vorherbestimmten Zugkraft auf das erfaßte Teil entspricht.

5. Druckluftpresse nach einem der Ansprüche 1 bis 4, dadurch gekennzeichnet, daß der Kolben (18) des Körpers auf der entgegengesetzen Seite der Stange (5) mit einem Magnetring (39) ausgerüstet ist, dessen Lage gegenüber dem Kolbenkörper durch Halleffekt-Lineargeber (40,48) bestimmt werden kann, die sich in einem geeigneten Kanal des Kolbenkörpers befinden.

6. Druckluftpresse nach Anspruch 5, dadurch gekennzeichnet, daß die vom Magnetfeldgeber (42) gelieferte Information durch zumindest einen der Lineargeber (40, 48) bewertet wird, dessen entsprechend auf eine Lage des Kolbens festgelegter Schwellwert gespeicher wird.

7. Druckluftpresse nach Anspruch 6, dadurch gekennzeichnet, daß je nach betreffendem Schwellwert der Kolben entweder normal durch ein "vorliegendes" Teil zum Stillstand kommt oder durch den Boden des Zylinders "bei fehlendem Teil".

**Claims**

1. Pneumatic squeezing device comprising a jackscrew body (1), a grip head (2) joined to the jackscrew body, some cogs (3) borne by the grip head, a piston (18) and a jackscrew stem (5) sliding into the jackscrew body and with respect to the grip head, a control piece (6) rigidly locked to the free end of the jackscrew stem and provided with stanchions (7) capable of activating the cogs (3) in response to the movements of the jackscrew stem (5), the piston (18) defining within the jackscrew body (1) an upper working chamber and a lower working chamber, and a control slide valve (41) capable of sliding into a cylindrical cavity in order to assume a first state in which an airduct (27) communicates with the upper action chamber by an airduct, and a second state in which the airduct does not communicate with the aforesaid chamber, the slide valve (41) being in the first state while the squeezing device is opening or reclosing the cogs (3) before gripping a piece, and assuming the second state when the squeezing device has gripped a piece to be gripped, characterized in that the slide valve (41) is kept in the first state by a calibrated spring (52) acting axially on the said slide valve (41) so that its head (50) shall be in contact with a catch (54) having a conical point, the catch (54) forming with the head (50) a chamber (55) connected to the airduct (22) by means of an oblique duct (49) at an acute angle, the oblique duct producing a depressing effect on the head (50) of the slide valve (41) in order to keep it in the first state when the air feeds the upper action chamber of the jackscrew by the airduct (22), the pressure that builds up in the said chamber when the cogs (8) that move apart have become caught on the grip piece exercising its action on the dorsal face of the slide valve (41) in order that it should take its second state, the head (50) then sealing the passage of air between the duct (23) and the duct (22).

2. Squeezing device according to patent claim 1, characterized in that the slide valve (41) is equipped with a magnetic ring (51) which influences a sensor of the magnetic field (42) in order to provide position information, in particular as soon as it has caught any cogs on a grip piece or at the end of the stroke, the information relating to the presence or the end of the stroke.

3. Squeezing device according to patent claim 1 or 2, characterized in that a second slide valve (43) is provided beneath the slide valve (41), the second consisting likewise of a head (50) which can likewise assume a first state in which a duct (30) is in communication with a duct (23) linked to the lower action chamber (11) of the jackscrew body, and a second state in which it seals the passage between the duct (30) and the duct (23), this slide valve (43) being likewise composed of a head (50) in contact, in the first state, with a catch having a conical point forming a chamber (55) with the said head, connected to the duct (22) by a duct (49), the slide valve (43) and the slide valve (41) permitting the utilisation of the squeezing device in external or internal grasping.

4. Squeezing device according to one of the patent claims 1 to 3, characterized in that, by acting on the calibrated spring (52) of the slide valve (41) or of the slide valve (43) linked to the work chamber under pressure, one may bring about the sealing of the intake duct (27) only at a pressure corresponding to the locking force predetermined for the piece being gripped.

5. Squeezing device according to one of the patent claims 1 to 4, characterized in that the piston (18) of the jackscrew is equipped, on the side opposite the stem (5), with a magnetic ring (39) whose position relative to the body of the jackscrew can be determined by the linear Hall-effect sensors (40, 48) located in a suitable duct of the body of the jackscrew.

6. Squeezing device according to patent claim 5, characterized in that information provided by the magnetic-field sensor (42) is validated by at leas one of the linear sensors (40, 48) whose threshold, suitably determined for one position of the piston, is placed in memory.

7. Squeezing device according to patent claim 6, characterized in that, depending on the threshold in question, the piston is normally stopped by a piece "being present" or by the bottom of the cylinder "in the absence of a piece".

FIG.1

FIG. 2

FIG.3

FIG.4

14

FIG. 5